# EUROPEAN PATENT APPLICATION

(11) **EP 4 513 929 A1**
(43) Date of publication of application: **26.02.2025**
(21) Application number: 23802443.4
(22) Date of filing: 15.02.2023
(51) Int. Cl.: H04W 12/088, H04L 9/40

(54) **PORT CONTROL METHOD FOR TERMINAL DEVICE, AND NETWORK DEVICE AND STORAGE MEDIUM**

(30) Priority: 12.05.2022 CN 202210514184
(71) Applicant: ZTE Corporation, Shenzhen, Guangdong 518057 (CN)
(72) Inventor: LI, Xueqiang, Shenzhen, Guangdong 518057 (CN); CHE, Zhonghui, Shenzhen, Guangdong 518057 (CN); MA, Xiaoliang, Shenzhen, Guangdong 518057 (CN)
(74) Representative: Savi, Massimiliano
(86) International application number: PCT/CN2023/076230
(87) International publication number: WO 2023/216667

(57) **Abstract**

Disclosed in the present application are a port control method for a terminal device, and a network device and a computer-readable storage medium. A terminal device is configured with a process whitelist set. The method comprises: performing state inspection on a process whitelist set to obtain a state inspection result, and updating the process whitelist set according to the state inspection result (S100); and when it is determined that the updated process whitelist set is empty, generating, according to a pre-configured whitelist access time set, a port control policy for controlling a port state of a terminal device (S200).

## Description

### CROSS-REFERENCE TO RELATED APPLICATION

This application is filed on the basis of Chinese patent application No. 202210514184.8 filed May 12, 2022, and claims priority of the Chinese patent application, the disclosure of which is incorporated herein by reference in its entirety.

### TECHNICAL FIELD

The present disclosure relates to the field of communications technologies, and in particular, to a port control method for a terminal device, a network device, and a computer-readable storage medium.

### BACKGROUND

With the popularization of 5G technologies, the trend of wireless broadband convergence has become increasingly apparent, followed by the wide application of wireless terminal products with 5G communication capabilities in various industries. Therefore, higher requirements have been placed on the device performance of terminals, and high performance, high transmission rates, and high reliability are three major performance indicators for 5G devices.

Among the three major performance indicators, high reliability has become increasingly important. Because mobile Internet terminal products are always subject to remote access in service scenarios, such as some commonly used functions being accessed remotely through secure shell (ssh), the telnet protocol, or remote login, the terminal device is required to keep the listening port enabled at all times to receive access information. Moreover, after the receiving of the access information is completed, the listening port has to be manually shut down. This leads to the problem that the terminal device is exposed to the network for a long period, making it vulnerable to malicious attacks. Additionally, the flexibility of port switching is reduced due to manually shutting down the listening port after completing the receiving of the access information. In order to address the problem of malicious attacks, a set of pre-configured whitelists is typically added for access, which increases the workload of the configuration personnel and makes it impossible to allocate the access time for external access devices out of the whitelist, thus resulting in the listening port remaining enabled all the time, which reduces the security of the network device.

### SUMMARY

The following is a summary of the subject matters described in detail herein. This summary is not intended to limit the scope of protection of the claims.

Embodiments of the present disclosure provide a port control method for a terminal device, a network device, and a computer-readable storage medium to realize the adjustment of the port state.

In accordance with a first aspect of the present disclosure, an embodiment provides a port control method for a terminal device configured with a process whitelist set. The port control method includes: performing a state detection on the process whitelist set to obtain a state detection result, and updating the process whitelist set according to the state detection result; and in response to determining that the updated process whitelist set is empty, generating a port control policy for controlling a port state of the terminal device according to a pre-configured whitelist access time set.

In accordance with a second aspect of the present disclosure, an embodiment provides a network device, including: a memory, a processor, and a computer program stored in the memory and executable by the processor. The computer program, when executed by the processor, causes the processor to implement the port control method for the terminal device of the first aspect.

In accordance with a third aspect of the present disclosure, an embodiment provides a computer-readable storage medium, storing computer-executable instructions configured to cause a computer to execute the port control method for the terminal device as described in the first aspect.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims, and the accompanying drawings.

### BRIEF DESCRIPTION OF DRAWINGS

The accompanying drawings are provided for a further understanding of the technical schemes of the present disclosure and constitute a part of the description. The accompanying drawings are used to explain the technical schemes of the present disclosure, and do not constitute a restriction on the technical schemes of the present disclosure.
FIG. 1 is a schematic diagram of a system architecture for a port control method for a terminal device according to an embodiment of the present disclosure;
FIG. 2 is a flowchart of a port control method for a terminal device according to an embodiment of the present disclosure;
FIG. 3 is a flowchart of step S100 in FIG. 2;
FIG. 4 is a flowchart of step S200 in FIG. 2;
FIG. 5 is a flowchart of a port control method for a terminal device according to another embodiment of the present disclosure;
FIG. 6 is a flowchart of a configuration method for a process whitelist set according to an embodiment of the present disclosure;
FIG. 7 is a flowchart of a port control method for a terminal device according to another embodiment of the present disclosure;
FIG. 8 is a flowchart of a port control method for a terminal device according to an example of the present disclosure;
FIG. 9 is a schematic diagram of a network topology of a port control method for a terminal device according to an example of the present disclosure; and
FIG. 10 is a schematic diagram of a network device according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It should be noted that, in the description of the embodiments of the present disclosure, the terms "first", "second", and the like in the specification, claims, and the above-described drawings are used to distinguish similar objects, and cannot be understood as indicating or implying relative importance, implicitly indicating the number of indicated technical features, or implicitly indicating the sequential relationship of the indicated technical features. The term "at least one" means one or more, and the term "a plurality of" means two or more. The term "and/or" describes an association relationship of associated objects, and represents that there may be three kinds of relationships. For example, A and/or B may represent three cases: only A exists, both A and B exist, and only B exists. A and B may be singular or plural. The character "/" generally indicates an "or" relationship between associated objects before and after the character. Although a functional module division may be shown in a schematic diagram of a device and a logical order may be shown in a flowchart, the steps shown or described can be executed, in some cases, with a different module division from that of the device or in a different order from that in the flowchart.

Further, the technical features involved in various embodiments of the present disclosure described below may be combined with each other to derive other embodiments not explicitly described.

Embodiments of the present disclosure provide a port control method for a terminal device, a network device, and a computer-readable storage medium. A state detection result is obtained by performing a state detection on process whitelists in a process whitelist set, and the process whitelist set is updated to filter the process whitelists in the process whitelist set according to the state detection result, so as to facilitate a removal of a process whitelist of access links which are in an inactive state, a released state, or a disconnected state from the process whitelist set. The security of the terminal device is ensured against the problem of potential attacks by updating the process whitelist set. Further, in response to determining that the updated process whitelist set is empty, a determination is made according to a pre-configured whitelist access time set, so as to generate a port control policy for controlling a port state of the terminal device, thereby realizing the enabling or disabling of the port. In other words, the state detection of the process whitelist in conjunction with a configuration of the whitelist access time set can improve the security of the terminal device and reduce the risk of the terminal device being attacked.

The embodiments of the present disclosure will be further explained below with reference to the accompanying drawings.

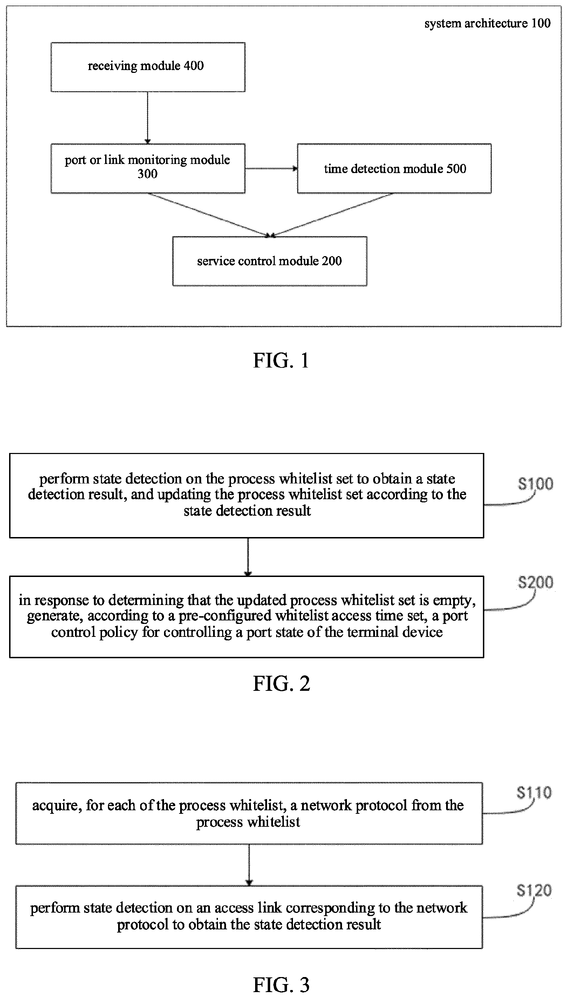

Refer to FIG. 1. it is a schematic diagram of a system architecture for a port control method for a terminal device according to an embodiment of the present disclosure.

In the example shown in FIG. 1, the system architecture 100 includes a service control module 200, a port and link monitoring module 300, a receiving module 400, and a time detection module 500.

In an embodiment, the service control module is configured to perform the state detection on an external access device or an access link to generate a port control policy for controlling the terminal device, manage time sets, such as a whitelist access time set and a whitelist disable time set, and maintain the state of a process whitelist set.

It can be understood that the service control module may be configured to disable or enable the port based on the port control policy.

In an embodiment, the port and link monitoring module is configured to detect the state of access link in the process whitelist that already exists in the process whitelist set.

It should be noted that the terminal device is configured with a process whitelist set, and the port and link monitoring module is configured to detect access links of all process whitelists in the process whitelist set, and in response to an access link being in at least one of an inactive state, a released state, or a disconnected state, a process whitelist corresponding to the access link is removed from the process whitelist set.

In an embodiment, the receiving module is configured to receive a request message for an open port or an access link from an external access device.

It can be understood that the receiving module is configured to enable the port of the terminal device either through the website user interface (WebUI) or remotely through a network protocol. The network protocol may be the tr069 protocol, which is a communication protocol for interactions between customer premises equipment (CPE) and an auto-configuration server (ACS).

In an embodiment, the time detection module is configured to configure time sets and control the active time of the already existing items.

It should be noted that the time detection module is configured to configure a whitelist access time set, a whitelist disable time set, and the like through a timer, as well as other time sets, which are not further limited in this embodiment.

The system architecture 100 and application scenario described in the embodiments of the present disclosure are intended to more clearly explain the technical schemes of the embodiments of the present disclosure, and do not constitute a limitation on the technical schemes provided by the embodiments of the present disclosure. Those having ordinary skill in the art may understand that, with evolution of the network topology and emergence of new application scenarios, the technical schemes provided by the embodiments of the present disclosure are also applicable to similar technical problems.

Those having ordinary skill in the art may understand that the system architecture shown in FIG. 1 does not constitute a limitation on the embodiments of the present disclosure, and there may be more or fewer components than illustrated, or some of the components may be combined, or a different arrangement of the components may be used.

Based on the structure of the system architecture described above, various embodiments of the port control method for a terminal device of the present disclosure are presented below.

Refer to FIG. 2. it is a flowchart of a port control method for a terminal device according to an embodiment of the present disclosure. This port control method for a terminal device applies to, but is not limited to, the service control module in the system architecture, and the terminal device is configured with a process whitelist set. This port control method for a terminal device includes, but is not limited to, a step S100 and a step S200.

At the step S100, a state detection is performed on the process whitelist set to obtain a state detection result, and the process whitelist set is updated according to the state detection result.

At the step S200, in response to determining that the updated process whitelist set is empty, a port control policy for controlling a port state of the terminal device is generated according to a pre-configured whitelist access time set.

In an embodiment, a state detection result is obtained by performing the state detection on all process whitelists in the process whitelist set, and the process whitelist set is updated according to the state detection result to filter the process whitelists in the process whitelist set, thereby reducing the probability of being attacked. In response to determining that no process whitelist exists in the updated process whitelist set, a determination is made according to the pre-configured whitelist access time set, so as to generate the port control policy for controlling the port state of the terminal device, thereby realizing the control of the port state in accordance with the configured time set, and enabling the port state to be adjusted to improve the security of the device.

It can be understood that an initial process whitelist set on which the state detection is performed may include a plurality of process whitelists or may be directly empty. In response to the initial process whitelist set being empty, a port control policy for controlling the port state of the terminal device is generated directly according to the pre-configured whitelist access time set.

It should be noted that the pre-configured whitelist access time set may be obtained through timing by a timing device such as a timer, and the whitelist access time set includes at least a set of timing periods. For example, an access period may be from 9:00 a.m. to 10:00 a.m., from 2:00 p.m. to 4:00 p.m., or from 9:00 p.m. to 10:00 p.m., or the like, which is not further limited in this embodiment.

It can be understood that the port control policy may be enabling the port, disabling the port, rejecting the request message, or accepting the request message, or the like, which is not further limited in this embodiment.

Refer to FIG. 3. it is an illustration of the step S100. In response to the process whitelist set including at least one process whitelist, the step S100 includes, but is not limited to, a step S110 and a step S120.

At the step S110, a network protocol is acquired from each of the process whitelists.

At the step S120, the state detection is performed on an access link corresponding to the network protocol to obtain the state detection result.

In an embodiment, in response to the process whitelist set including at least one process whitelist, for each process whitelist in the process whitelist set, a network protocol is acquired from the process whitelist, and the state detection is performed on an access link corresponding to the network protocol. Finally, a state detection result for the process whitelist set is obtained, thereby improving the accuracy of the detection of the process whitelist set, improving the security of the terminal device, and facilitating the subsequent update of the process whitelist set.

In an embodiment, in response to the state detection result including that the access link is in at least one of an inactive state, a released state, or a disconnected state, a process whitelist corresponding to the access link is removed from the process whitelist set to obtain the updated process whitelist set, thereby avoiding the occurrence of a potential attack.

It should be noted that, in response to the state detection result including that the access link is in at least one of an inactive state, a released state, or a disconnected state, the process whitelist corresponding to the access link may be removed from the process whitelist set, thereby realizing an update of the process whitelist set. The inactive state means that the access link is no longer active.

It can be understood that in response to the state detection result including that the access link is in an active state, a connected state, and so on, the process whitelist corresponding to the access link continues to be saved, and the process whitelist set is continuously updated until the process whitelist set is empty.

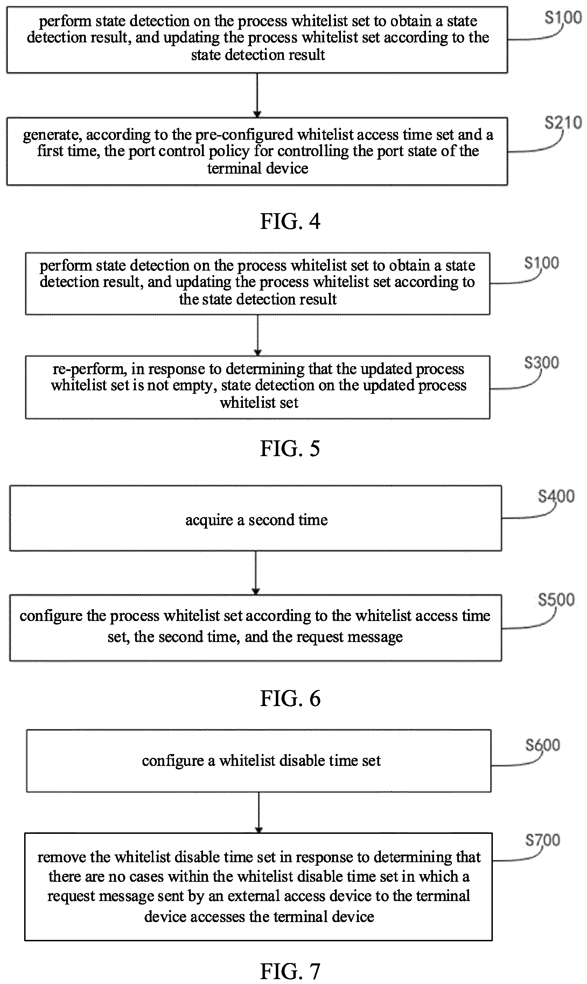

Refer to FIG. 4. it is an illustration of the step S200 which includes, but is not limited to, a step S210.

At the step S210, according to the pre-configured whitelist access time set and a first time, the port control policy is generated for controlling the port state of the terminal device.

It should be noted that the first time is a time at which the updated process whitelist set is determined to be empty.

It can be understood that the first time is obtained through timing according to a timing device such as a timer.

In an embodiment, the port control policy for controlling the port state of the terminal device is generated according to the pre-configured whitelist access time set of the timer, and the first time is determined according to the timer, so that the control of the port state is realized by setting the time set, thereby ensuring the security of the terminal device, and realizing real-time update of the process whitelist set.

In an embodiment, in response to determining that the first time is not within the whitelist access time set, a port control policy is generated for rejecting an external access device service request, thereby improving the security of the terminal device.

It should be noted that, in response to the first time being out of the access period in the whitelist access time set, the port control policy for rejecting an external access device service request is generated. For example, if the access period in the whitelist access time set is from 9:00 a.m. to 10:00 a.m., and the first time is 8:30 a.m., the port control policy for denying the external access device service request is generated.

It can be understood that generating the port control policy for rejecting the external access device service request may be disabling the port of the terminal device or directly shutting down the terminal device, or the like, which is not further limited in this embodiment.

In an embodiment, in response to determining that the first time is within the whitelist access time set, a port control policy is generated for accepting an external access device service request, thereby improving the security of the terminal device.

It should be noted that, in response to the first time being within the access period in the whitelist access time set, the port control policy for accepting an external access device service request is generated. For example, if the access period in the whitelist access time set is from 9:00 a.m. to 10:00 a.m., and the first time is 9:30 a.m., the port control policy for accepting the external access device service request is generated.

It can be understood that the port control policy for accepting the external access device service request may be enabling the port of the terminal device, or accepting the external access device service request, or the like, which is not further limited in this embodiment.

Refer to FIG. 5. it is a flowchart of a port control method for a terminal device according to another embodiment of the present disclosure. This port control method for the terminal device includes, but is not limited to, a step S300.

At the step S300, in response to determining that the updated process whitelist set is not empty, the state detection is re-performed on the updated process whitelist set.

In an embodiment, in response to determining that the updated process whitelist set still includes a process whitelist, the state detection is re-performed on the process whitelist in the updated process whitelist set until the process whitelist set is empty This avoids the occurrence of a potential attack, thereby ensuring the security of the terminal device.

It can be understood that the state detection is re-performed on the updated process whitelist set until the process whitelist set is empty, and then a determination is made based on the pre-configured whitelist access time set to generate the port control policy for controlling the port state of the terminal device, thereby realizing a cyclical determination of the process whitelist set.

Referring to FIG. 6. it is a flowchart of a configuration method for a process whitelist set according to an embodiment of the present disclosure. The configuration method for a process whitelist set includes, but is not limited to, a step S400 and a step S500.

At the step S400, a second time is acquired.

It should be noted that the second time is a time at which a request message sent by an external access device to the terminal device arrives at the terminal device.

It can be understood that the second time may be obtained through timing by a timing device such as a timer.

At the step S500, the process whitelist set is configured according to the whitelist access time set, the second time, and the request message.

In an embodiment, a determination is made according to the pre-configured whitelist access time set and the second time of the arrival of the request message, and the process whitelist set is configured according to the determination result. It facilitates the operation of the maintenance personnel, filters the request message, and improves the security of the terminal device.

In an embodiment, the request message is rejected in response to the second time being out of the whitelist access time set.

It can be understood that in response to the second time being out of the access period of the whitelist access time set, the request message of the external access device is rejected. It facilitates the determination of the request message.

In an embodiment, the request message is rejected in response to the second time being within the whitelist access time set and the process whitelist set having reached a preset saturation state.

It can be understood that in response to determining that the second time is within the access period of the whitelist access time set, it is required to determine whether the process whitelist set has reached a saturation state. In response to determining that the process whitelist set has reached the preset saturation state, the request message of the external access device is rejected.

It should be noted that the preset saturation state of the process whitelist set can be set according to different specific application scenarios, which is not limited here. For example, it may indicate that the number of process whitelists in the process whitelist set has reached an upper limit. For example, if it is set at the beginning that the process whitelist set may include at most ten process whitelists. Therefore, when the process whitelist set has already contained ten process whitelists, the process whitelist set reaches the preset saturation state. As another example, the preset saturation state may indicate that a memory space is completely occupied by all process whitelists in the process whitelist set. For example, if ten gigabytes of memory space is allocated to the process whitelist set at the beginning, it may be determined that the process whitelist set has reached the preset saturation state when the ten gigabytes have already been occupied by all of the process whitelists in the process whitelist set completely. As another example, it may be a preset queue set in advance that matches the process whitelist set. In this case, the network protocols for all the process whitelists in the process whitelist set are populated into the queue. Once the queue is filled, it can be determined that the process whitelist set has reached the preset saturation state.

It can be understood that if the determination of whether the process whitelist set has reached the preset saturation state is made according to the number of process whitelists, the process whitelist set includes at most five, ten, or fifteen process whitelists, and the like. If the determination of whether the process whitelist set has reached the preset saturation state is made according to the memory space allocated to the process whitelist set, the memory space allocated to the process whitelist set may be ten, twenty, or thirty gigabytes, and the like. If the determination of whether the process whitelist set has reached the preset saturation state is made according to a preset established queue, the length of the queue may be 5, 10, or 15, etc., which is not further limited in this embodiment.

In an embodiment, a network protocol corresponding to the request message is added to the process whitelist set as a process whitelist in response to the second time being within the whitelist access time set and the process whitelist set having not reached a preset saturation state.

It can be understood that in response to the second time being in the access period of the whitelist access time set and the process whitelist set having not reached the preset saturation state, the network protocol corresponding to the request message is added to the process whitelist set as a process whitelist, thereby realizing the configuration of the process whitelist set and facilitating the operation of the maintenance personnel.

It should be noted that the process whitelist set having not reached the preset saturation state may be as follows. If the preset saturation state is that the process whitelist set includes at most ten process whitelists, and there are currently eight process whitelists in the process whitelist set, in response to determining that the second time for the request message being in the whitelist access time set and the process whitelist set has not reached the preset saturation state, the network protocol corresponding to the request message can be added to the process whitelist set as a process whitelist, thereby realizing the configuration of the process whitelist set. If the preset saturation state is that the process whitelist set can occupy at most ten gigabytes of memory space, and all process whitelists in the process whitelist set are currently occupying eight gigabytes of memory space, in response to determining that the second time for the request message is in the whitelist access time set and the process whitelist set has not reached the preset saturation state, the network protocol corresponding to the request message may be added to the process whitelist set as a process whitelist. If the preset saturation state is indicated by a queue of a length of ten for the process whitelist set for the process whitelist set, and the length of the network protocol for the process whitelists in the process whitelist set in the queue is currently eight, in response to determining that the second time for the request message is in the whitelist access time set and the process whitelist set has not reached the preset saturation state, the network protocol corresponding to the request message can be added to the process whitelist set as a process whitelist.

In an embodiment, performing a state detection on the process whitelist set to obtain a state detection result includes at least one of follow items.

Alternatively, the state detection is performed on the process whitelist set to obtain the state detection result in response to enabling a port of the terminal device.

Alternatively, the state detection is performed on the process whitelist set to obtain the state detection result in response to enabling link monitoring of the process whitelist set.

It should be noted that the state detection may be performed on the process whitelist set to obtain the state detection result in response to enabling the port of the terminal device, or in response to enabling link monitoring of the process whitelist set. The state detection result obtained by performing the state detection on the process whitelist set facilitates state detection of the process whitelist set and control of the port state of the terminal device.

Refer to FIG. 7. it is a flowchart of a port control method for a terminal device according to another embodiment of the present disclosure. This port control method for the terminal device includes, but is not limited to, a step S600 and a step S700.

At the step S600, a whitelist disable time set is configured.

At the step S700, the whitelist disable time set is removed in response to determining that no external access device sends a request message to the terminal device accesses the terminal device within the whitelist disable time set.

In an embodiment, in response to determining that the updated process whitelist set is empty, the whitelist disable time set is configured by a timing device, such as a timer, and in response to determining that no request message accesses the terminal device within the whitelist disable time set, the whitelist disable time set is removed, thereby improving the flexibility of the terminal device.

It should be noted that in response to determining that the updated process whitelist set is empty, the timer is started to obtain the whitelist disable time set through configuration. If a new request message sent by an external access device to the terminal device arrives at the terminal device during the period of the whitelist disable time set, a determination is re-performed based on the time at which the new request message sent by the external access device arrives at the terminal device and the pre-configured whitelist access time set. In response to determining that the arrival time is in the whitelist access time set, it is determined whether the process whitelist set has reached a preset saturation state. In response to the process whitelist set having reached the preset saturation state, the new request message is rejected. In response to the process whitelist set having not reached the preset saturation state, a network protocol corresponding to the new request message is added to the process whitelist set as a process whitelist.

In an embodiment, during the execution of the port control method for a terminal device, in response to the network protocol of the terminal device being changed due to the occurrence of restarting or redialing of the terminal device, the port of the terminal device is disabled.

In order to more clearly illustrate the process of the port control method for a terminal device, an illustration is given below by way of examples.

### Example embodiment I:

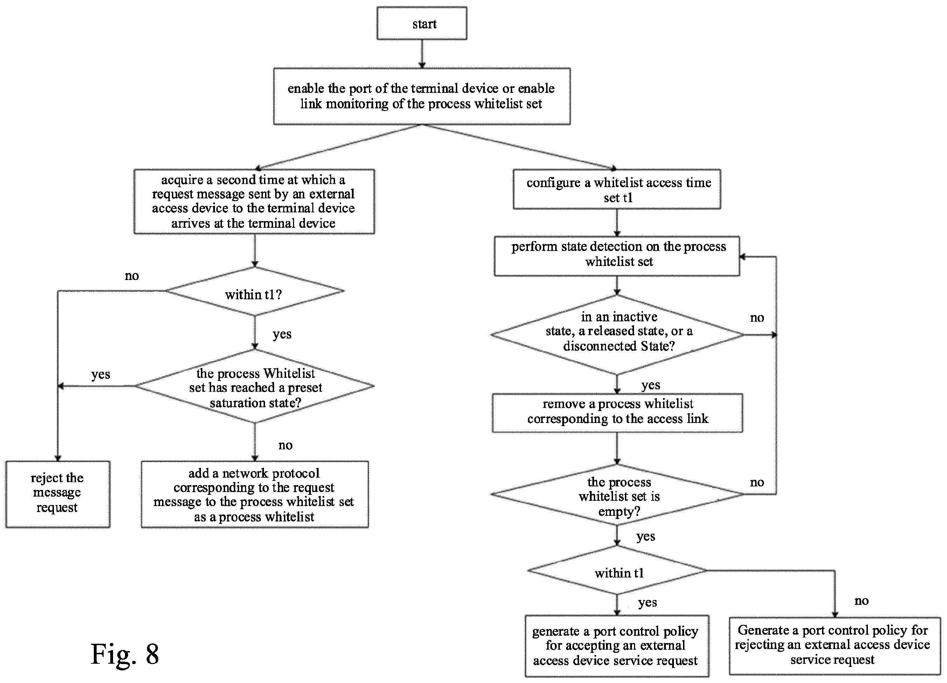

Refer to FIG. 8. it is a flowchart of a port control method for a terminal device according to an example.

The left part of FIG. 8 illustrates the receiving and processing of a request message for an open port or an access link from an external access device. The process is as follows.

At a step 1: the local terminal device is automatically controlled by enabling the port of the terminal device either through the website user interface (WebUI) or remotely through a network protocol, and a whitelist access time set t1 is set.

At a step 2: a request message from an external remote device that requests access to a certain service of the device, which arrives at the terminal device, is received.

At a step 3: it is checked whether the second time is within t1, and in response to it being out of the whitelist access time set, this request message is rejected; otherwise, in response to it being within the whitelist access time set, the process proceeds to a step 4.

At the step 4: it is checked whether the process whitelist set has reached the preset saturation state. In response to the process whitelist set having not reached the preset saturation state, the Internet Protocol (IP) for this request is set to be a whitelist; otherwise, in response to the process whitelist set having reached the preset saturation state, the request message is rejected.

In an embodiment, in response to enabling the port of the terminal device or link monitoring of the process whitelist set, the state detection is performed on the process whitelist set to obtain the state detection result. Firstly, a request message from an external remote device is received, and a second time at which the request message arrives at the terminal device is obtained through a timer. Then, the process whitelist set is configured based on the whitelist access time set, the second time, and the request message. In response to the second time being out of the whitelist access time set, the request message is rejected, otherwise, in response to the second time being within the whitelist access time set, it is determined whether the process whitelist set has reached a preset saturation state.

In response to the process whitelist set having reached the preset saturation state, the request message is rejected; otherwise, in response to the process whitelist set having not reached the preset saturation state, the network protocol corresponding to the request message is added to the process whitelist set as a process whitelist, so as to facilitate the operation of the maintenance personnel, filter the request message, and improve the security of the terminal equipment.

The right part of FIG. 8 is responsible for policy control and time control of the configured external service or access link, as well as maintaining the state information of the process whitelist set. The process is as follows.

At a step 1: the port of the terminal device is enabled, or link monitoring is enabled for the process whitelist set.

At a step 2: the whitelist access time set is loaded to initiate time control.

At a step 3: the process enters into the state detection. In response to detecting that the access link associated with an ip in the process whitelist set is no longer active, or that the access link is in a released or disconnected state, the process whitelist corresponding to the ip is removed; otherwise, the process continues the state detection.

At step 4: in accordance with the description of step 3, it is detected whether the number of the remaining process whitelists in the process whitelist set is null. In response to it being not null, the process enters the state detection from the beginning; otherwise, in response to it being null, the process continues to perform the state detection.

At step 5: in accordance with the description of step 4, in response to the first time being within t1, the port control policy is modified to accepting an external port service request; otherwise, in response to the first time being out of t1, the port control policy is modified to rejecting the external port service request.

In an embodiment, in response to enabling the port of the terminal device or link monitoring of the process whitelist set, the state detection is performed on the process whitelist set to obtain the state detection result. For each process whitelist, a network protocol is acquired from the process whitelist, and the state detection is performed on an access link corresponding to the network protocol to obtain the state detection result. In response to the state detection result including that the access link is in at least one of an inactive state, a released state, or a disconnected state, the process whitelist corresponding to the access link is removed from the process whitelist set to obtain the updated process whitelist set, and the port control policy for controlling the port state of the terminal device is generated according to the pre-configured whitelist access time set and a first time. In response to the first time being out of the whitelist access time set, the port control policy for rejecting an external access device service request is generated, otherwise, in response to the first time being within the whitelist access time set, the port control policy for accepting an external access device service request is generated. In response to determining that the updated process whitelist set is not empty, the state detection is re-performed on the updated process whitelist set, thereby improving the security of the device and reducing the risk of being attacked.

### Example embodiment II:

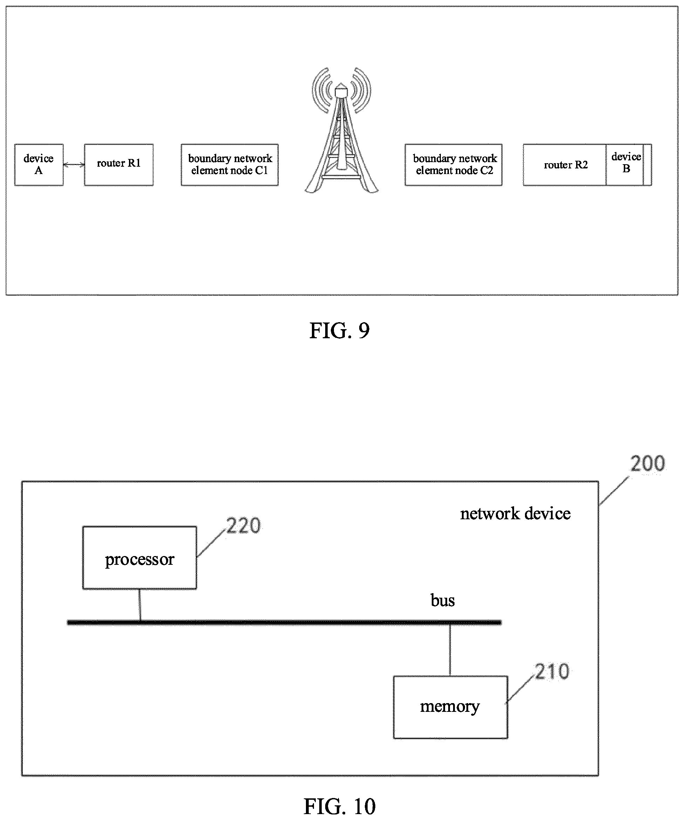

Refer to FIG. 9. it is a schematic diagram of a network topology of a port control method for a terminal device according to an example of the present disclosure.

A device A is connected to a router R1 via a network cable, and R1 performs 5G/LTE (Long Term Evolution) dialing to acquire a private network ip from the operator, which is internally assigned by the operator. On the counter end, a router R2 also performs 5G/LTE dialing, and a process B inside the device R2 monitors a port of the transmission control protocol (TCP). Between the router R1 and the network, there exists a border network element node C1 in the core network, which is configured with a globally unique wan ip address (external network protocol address). Between the router R2 and the network, there exists a border network element node C2 in the core network. A message sent by the device A arrives at the router R2. After receiving the message, R2 triggers the network port automatic control function, and detects whether the current time is within the configured t1 time set that allows external access. After the determination, the wan ip address corresponding to the device C1 is added to the whitelist, and then the device A enters into the interaction with the process B. Once the interaction is completed, the link is interrupted and removed from the whitelist, and then the whitelist is empty. In addition, it is no longer within the t1 time set that allows external access, and the device is triggered to refuse to accept the external port service request again.

Further, referring to FIG. 10, an embodiment of the present disclosure also provides a network device. The network device 200 includes a memory 210, a processor 220, and a computer program stored in the memory 210 and executable by the processor 220.

The processor 220 and the memory 210 may be connected by a bus or by other means.

As a non-transitory computer-readable storage medium, the memory 210 may be configured to store a non-transitory software program and a non-transitory computer-executable program. In addition, the memory 210 may include a high-speed random access memory and a non-transitory memory, for example, at least one magnetic disk storage device, flash memory device, or another non-transitory solid-state storage device. In some implementations, the memory 210 may include memories remotely disposed with respect to the processor 220, and these remote memories may be connected to the processor 220 via a network. Examples of the above-mentioned network include, but are not limited to, the Internet, an intranet, a local area network, a mobile communication network, and a combination thereof.

The embodiments described above are only for illustration. The units described as separate components may or may not be physically separated, that is, they may be located at one place or distributed to multiple network units. Some or all of the modules can be selected according to actual needs to achieve the purpose of the scheme of this embodiment.

Furthermore, an embodiment of the present disclosure also provides a computer-readable storage medium storing computer-executable instructions which, when executed by a processor or controller, for example, by the processor in the above embodiment of the device, can cause the processor to perform the port control method for the terminal device in any of the above embodiments, for example, to execute the above-described method steps S100 to S200 in FIG. 2, S110 to S120 in FIG. 3, S210 in FIG. 4, S300 in FIG. 5, S400 to S500 in FIG. 6, or S600 to S700 in FIG. 7.

Furthermore, an embodiment of the present disclosure also provides a computer program product, including a computer program or computer instructions, where the computer program or the computer instructions are stored in a computer-readable storage medium, a processor of a computer device reads the computer program or the computer instructions from the computer-readable storage medium, and the computer program or the computer instructions, when executed by the processor, cause the computer device to perform the port control method for the terminal device as described in any of the previous embodiments.

The port control method for a terminal device according to embodiments of the present disclosure has at least the following beneficial effects. A state detection result is obtained by performing a state detection on process whitelists in the process whitelist set, and the process whitelist set is update to the filter the process whitelists in the process whitelist set according to the state detection result, so as to facilitate a removal of a process whitelist of access links which are in an inactive state, a released state, or a disconnected state from the process whitelist set. The security of the terminal device is ensured against the problem of potential attacks by updating the process whitelist set. Further, in response to determining that the updated process whitelist set is empty, a determination is made according to a pre-configured whitelist access time set, so as to generate a port control policy for controlling a port state of the terminal device, thereby realizing the enabling or disabling of the port. In other words, the state detection of the process whitelist in conjunction with a configuration of the whitelist access time set can improve the security of the terminal device and reduce the risk of the terminal device being attacked.

In addition, the functional units in each embodiment of the present disclosure may be integrated into one processing unit, or each unit may be physically separate, or two or more units may be integrated into one unit. The integrated unit mentioned above can be realized either in the form of hardware or in the form of a combination of hardware and software functional units.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to random access memory (RAM), read-only memory (ROM), electrically erasable programmable read-only memory (EEPROM), flash memory or other memory techniques, compact disc read-only memory (CD-ROM), digital versatile disk (DVD) or other optical disk storage, magnetic cassette, magnetic tape, magnetic disk storage or other magnetic storage devices, or any other medium that can be used to store desired information and can be accessed by a computer. Furthermore, as well known to those having ordinary skill in the art, communication media typically contain computer-readable instructions, data structures, program modules or other data in a modulated data signal such as a carrier wave or other transmission mechanism, and may include any information transmission media.

The above is a detailed description of some implementations of the present disclosure, but the present disclosure is not limited to the above-mentioned embodiments. Those having ordinary skill in the art can also make various equivalent modifications or replacements without departing from the principle of the present disclosure, and these equivalent modifications or replacements are all included in the scope defined by the claims of the present disclosure.

## Claims

1. A port control method for a terminal device configured with a process whitelist set, the port control method comprising:
performing a state detection on the process whitelist set to obtain a state detection result, and updating the process whitelist set according to the state detection result; and
in response to determining that the updated process whitelist set is empty, generating a port control policy for controlling a port state of the terminal device according to a pre-configured whitelist access time set.

2. The port control method for the terminal device of claim 1, wherein in response to the process whitelist set comprising at least one process whitelist, performing a state detection on the process whitelist set to obtain a state detection result comprises:
acquiring a network protocol from each of the at least one process whitelist; and
performing the state detection on an access link corresponding to the network protocol to obtain the state detection result.

3. The port control method for the terminal device of claim 2, wherein updating the process whitelist set according to the state detection result comprises:
in response to the state detection result comprising that the access link is in at least one of an inactive state, a released state, or a disconnected state, removing the process whitelist corresponding to the access link from the process whitelist set to obtain the updated process whitelist set.

4. The port control method for the terminal device of claim 1, wherein generating a port control policy for controlling a port state of the terminal device according to a pre-configured whitelist access time set comprises:
generating the port control policy for controlling the port state of the terminal device according to the pre-configured whitelist access time set and a first time, wherein the first time is a time at which the updated process whitelist set is determined to be empty.

5. The port control method for the terminal device of claim 4, wherein generating the port control policy for controlling the port state of the terminal device according to the pre-configured whitelist access time set and a first time comprises:
in response to determining that the first time is out of the whitelist access time set, generating the port control policy for rejecting an external access device service request;
or
in response to determining that the first time is within the whitelist access time set, generating the port control policy for accepting an external access device service request.

6. The port control method for the terminal device of claim 1, further comprising:
in response to determining that the updated process whitelist set is not empty, re-performing the state detection on the updated process whitelist set.

7. The port control method for the terminal device of claim 1, wherein the process whitelist set is configured and obtained by the following steps, comprising:
acquiring a second time, wherein the second time is a time at which a request message sent by an external access device to the terminal device arrives at the terminal device; and
configuring the process whitelist set according to the whitelist access time set, the second time, and the request message.

8. The port control method for the terminal device of claim 7, wherein configuring the process whitelist set according to the whitelist access time set, the second time, and the request message comprises one of:
rejecting the request message in response to the second time being out of the whitelist access time set;
rejecting the request message in response to the second time being within the whitelist access time set and the process whitelist set having reached a preset saturation state; or
adding a network protocol corresponding to the request message to the process whitelist set as a process whitelist in response to the second time being within the whitelist access time set and the process whitelist set having not reached a preset saturation state.

9. The port control method for the terminal device of claim 1, wherein performing a state detection on the process whitelist set to obtain a state detection result comprises at least one of:
performing the state detection on the process whitelist set to obtain the state detection result in response to enabling a port of the terminal device; or
performing the state detection on the process whitelist set to obtain the state detection result in response to enabling link monitoring of the process whitelist set.

10. The port control method for the terminal device of claim 1, wherein in response to determining that the updated process whitelist set is empty, the method further comprises:
configuring a whitelist disable time set; and
removing the whitelist disable time set in response to determining that no external access device sends a request message to the terminal device to access the terminal device within the whitelist disable time set.

11. A network device, comprising: a memory, a processor, and a computer program stored in the memory and executable by the processor, wherein the computer program, when executed by the processor, causes the processor to execute the port control method for the terminal device of any one of claims 1 to 10.

12. A computer-readable storage medium, storing computer-executable instructions configured to cause a computer to execute the port control method for the terminal device of any one of claims 1 to 10.
